# EUROPEAN PATENT APPLICATION

(11) **EP 1 523 084 A1**
(43) Date of publication of application: **13.04.2005**
(21) Application number: 04256224.9
(22) Date of filing: 08.10.2004
(51) Int. Cl.: H02K 3/14, H02K 3/30, H02K 3/34, H02K 15/12, H02K 3/40

(54) **Flexible stator bars**

(30) Priority: 09.10.2003 US 684186
(71) Applicant: GENERAL ELECTRIC COMPANY, Schenectady, NY 12345 (US)
(72) Inventor: Wang, Yu, Clifton Park, New York 12065 (US); Laskaris, Evangelos Trifon, Schenectady, New York 12309 (US); Sivasubramaniam, Kiruba Haran, Clifton Park, New York 12065 (US); Gao, George, Round Rock, Texas 78664 (US); Lee, Martin Kin-Fei, Niskayuna, New York 12309 (US)
(74) Representative: Goode, Ian Roy

(57) **Abstract**

A flexible stator bar (10) generally includes a stranded conductor (12) having a rectangular shaped cross sectional profile, wherein the stranded conductor (12) comprises a plurality of wires having a gauge dimension effective to impart flexibility; and a thermoplastic elastomeric insulating material (14) disposed about the stranded conductor (12). Also disclosed herein are processes for fabricating the flexible stator bar (10), which generally comprises depositing a thermoplastic elastomeric insulating material (14) onto the flexible stranded conductor (12), which can be flexibly oriented into a desired position, thereby improving dimensional control relative to Roebel-type stator bars. The insulated flexible stranded conductor (12, 14) may then be coated with a B-stage epoxy or the like and cured to form the final shape after assembly within the desired electrical machine application.

## Description

The present disclosure generally relates to flexible stator bars, and more particularly, relates to processes for fabricating the flexible stator bars having an insulation material disposed thereon.

Stator bars conduct current out of the generator. Typically, a generator comprises a rotor that rotates in a magnetic field, thereby inducing an electrical field in a conductor. The stator bar is the conductor and is typically made of solid copper bars, which are also commonly referred to as Roebel bars. Roebel bars are typically bound by an insulation material and are generally non-flexible. Because of the inflexibility, the bars are finally shaped prior to disposing the insulation material thereabout. One of the primary reasons for this is to prevent cracking of the insulation material, which would lead to arcing.

Current manufacturing processes generally includes making the copper bars, forming the bars into a desired shape for the intended application, wrapping the so-formed bar with an insulation material, and curing. The process is relatively long and involves multiple steps. Moreover, since copper is known to have memory effects, large dimensional variations occur during processing. This variation provides a significant challenge in joining the bar ends such as is required in armature assembly. Any effort in correcting the dimensional variations, such as by reshaping or the like, can result in cracking of the insulative material as noted above. In order to accommodate the dimensional variations, larger air spaces between the bars and slots are commonly employed to accommodate these variations. However, larger air spaces produce significant increases in thermal resistance, and therefore reduce the effectiveness of heat transfer.

Typically, the insulation material for generator stator bars is made by a taping process. Multiple layers of any thermosetting epoxy, mica, and/or glass tape are wrapped around the stator bar and then covered with subsequent layers of a sacrificial polymer that is intended to protect the insulation layers during later processing. The insulation material is fairly brittle and tends to crack if the bar requires reshaping to correct dimensional variations that may occur during processing. The wrapped stator bars are then heated under vacuum to remove most of the residual solvent from the epoxy resin. The epoxy resin is cured under pressure using conditions that are designed to allow the epoxy to flow sufficiently to fill any voids present in the wrapped layers. In a different process, multiple layers of mica containing tape are wrapped around the stator bar. Then, in a subsequent operation, the bar is vacuum dried to remove air and volatiles followed by pressure impregnation with an epoxy or silicone material. While providing an excellent electrical insulation when properly manufactured, as previously discussed, these processes are very time consuming and labor intensive. Also, because of the variable processing parameters, such as time, temperature and pressure, needed to balance the proper amount of solvent release and the degree of epoxy flow prior to full cure of the epoxy resin, these systems are prone to producing an insulation that is incompletely cured or possesses residual voids. Insulation on high voltage electrical conductors, including generator parts such as stator bars and tie rods, is frequently exposed to conditions that can cause breakdown of the insulation. Such phenomena include corona discharges and the effects of high temperatures.

It is desirable to have an insulation material that meets the thermal, mechanical and electrical property requirements of the stator bar environment and that can be applied to the stator bar using simpler methods. It is also desirable to provide a method of applying insulation that is not so labor intensive, and therefore, is cheaper, while at the same time offering thermal and electrical properties that are better than those available with the process of the prior art. It is also desirable to have a stator bar with improved dimensional control. Moreover, it is desirable to have a stator bar that overcomes the challenges associates with fill capacity, a problem generally caused by the geometric dimensions of the bars or stranded bars currently employed for forming the conductor.

According to the present invention, where is provided a process for forming a flexible stator bar, comprising depositing a thermoplastic elastomeric insulating material onto a flexible stranded conductor, wherein the stranded conductor comprises a plurality of strands compressed together to form a substantially rectangular cross sectional profile; and shaping the flexible stator bar with the insulating material into a final shape for an electrical machine application.

In another embodiment of the invention, the process for forming a flexible stator bar, comprises extruding an elongated hollow profile of a thermoplastic elastomeric insulating material; threading a flexible stranded conductor into the elongated hollow profile, wherein the stranded conductor comprises a plurality of wires having a gauge dimension effective to impart the flexibility; and filling gaps between the elongated profile and the stranded conductor with an insulating resin.

A flexible stator bar, comprising a stranded conductor having a rectangular shaped cross sectional profile, wherein the stranded conductor comprises a plurality of wires having a gauge dimension effective to impart flexibility; and a thermoplastic elastomeric insulating material disposed about the stranded conductor.

The above-described embodiments and other features will become better understood from the detailed description that follows.

Referring now to the figures wherein like elements are numbered alike:

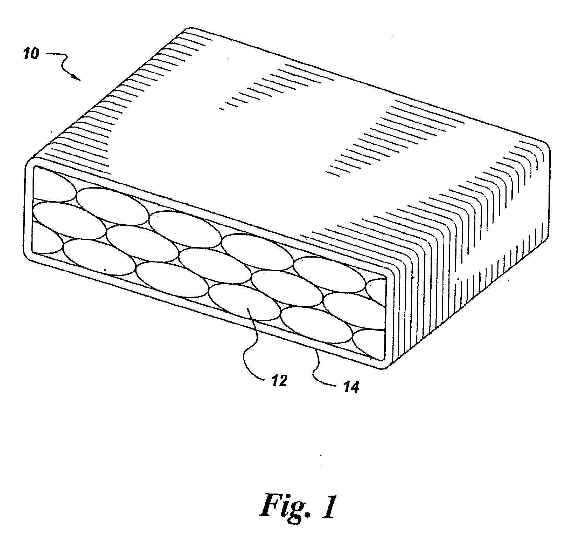

Figure 1 is a cross section of a flexible stator bar in accordance with the present disclosure.

Figure 1 illustrates a cross sectional view of a flexible stator bar generally designated 10. The illustrated flexible stator bar is especially suitable for use a flexible generator stator bar. As shown, the cross sectional shape of the stator bar has a substantially rectangular shaped profile. The rectangular shaped profile is important for its end use in electrical machine applications. The rectangular shaped profile is dimensioned to fit within slots of a stator assembly.

The flexible stator bar 10 generally includes a stranded electrical conductor having one or more strands 12 of copper, for example. Collectively, the combined strands are flexible so as to form a flexible bar as opposed to the inflexible bars employed in the prior art, e.g., Roebel bars. Rather, the flexible stator bar 10 is preferably formed from of individual wires, i.e., strands, having a defined gauge that, unlike the prior art, permits flexibility of the generator stator bar once assembled and during the manufacturing process. The strands generally have a circular cross section, which can become oval shaped upon compression into the rectangular shaped profile as shown. The use of strands as described essentially eliminates any memory effect and as such, results in superior dimensional control because of the flexibility of the stator bar 10. In this manner, the flexible stator bars can be easily manipulated to fit with a slot upon assembly of an electrical machine, such as a generator. In one embodiment, the stranded conductor comprises a plurality of conductive strands that are twisted and compressed into the rectangular shaped profile. Alternatively, the stranded conductor is preferably braided and formed into the rectangular shaped profile.

The stranded conductor can be of any gauge conductor that still permits flexibility upon compression into the rectangular shaped profile. Suitable stranded conductors comprise Litz wires, magnetic wires, and the like. The use of stranded conductors as described herein eliminates the problems associated with memory of copper bars, thereby providing better dimensional control. Moreover, since dimensional control is improved by the use of the flexible stranded conductor, even better heat transfer is possible since the improved dimensional control (resulting in improved alignment) permits the removal of side ripple springs, which in turn improves the net fill factor.

A thermoplastic elastomeric insulating material 14 is preferably deposited onto the so-formed stranded conductor. Deposition can be effected by numerous ways including, but not limited to, extrusion, compression molding, laminating, thermoforming, painting, or taping processes. In a preferred embodiment, the insulating material is extruded onto the stranded conductor. The term "thermoplastic elastomer" is defined herein as a material that exhibits rubber-like characteristics (i.e., has an elastic modulus of at least about 10⁶ newtons per meter squared at about room temperature) yet may be melt processed with most thermoplastic processing equipment, such as by extrusion. The rubber-like characteristics typically desired are high extensibility, mechanical recovery, resiliency, and low temperature ductility. As will be described herein, depositing the elastomeric insulating material onto the stranded conductor 12 can be a one-step process as opposed to the multi-step processes required in the prior art. Moreover, by employing thermoplastic elastomeric insulating materials, cracking of the insulation as well as those problems associated with flexing the stator bar are eliminated. As such, deposition can occur prior to shaping the stator bar, thereby representing a significant commercial advantage over prior art processes. Still further, the insulating material can stabilize the electrically conductive copper strands, such as by preventing oxidation over time that could otherwise reduce the effectiveness of the electrically conductive strands.

Suitable thermoplastic elastomeric materials include, but are not intended to be limited to, polyolefins, e.g., crosslinked polyethylene (XLPE); styrenics, e.g., styrene-ethylene-butylene-styrene (SEBS); polyurethanes;polysulfones, polyimides copolyesters; copolyamides; polysiloxanes; polyorganophosphazines; polynorbornene; and other like thermoplastic elastomers. Thermoplastic elastomers generally result from copolymerization of two or more monomers. One of the monomers is used to provide hard crystalline features whereas another monomer is used to provide soft, amorphous features.

For example, thermoplastic elastomeric polyolefins can be selected from a group consisting of polyethylene, co-polymers, terpolymer of polyethylene, or blends of different polyethylenes or polyolefins. Either high density or low-density polyethylenes are useful within this disclosure. For the case of the copolymer or terpolymer, the incorporated monomers may either be in random, alternating, block, or graft juxtaposition. The polyolefin polymers may be either isotactic, syntactic or atactic. One preferred polymer composition is crosslinked polyethylene, also referred to as XLPE. Particularly preferred thermoplastic elastomeric polyolefins are derived from the metallocene process as is well known by those in the art. These co-polymers are generally prepared using Group IVB catalysts (e.g., titanium, zirconium or hafnium compounds) and are especially randomized in the juxtaposition of the monomers.

Other functionalized monomers that can be included as part of the polyolefin include acrylate and methacrylate esters such as methyl acrylate, ethyl acrylate, and butyl acrylate; ionomers such as acrylic acid and methacrylic acid and metal salts thereof; and olefinic esters of low molecular weight carboxylic acids such as vinyl acetate.

The thermoplastic elastomer compositions may be compounded with conventional additives or process aids such as antioxidants, such as, for example, organophosphites, for example, tris(nonyl-phenyl)phosphite, tris(2,4-di-t-butylphenyl)phosphite, bis(2,4-di-t-butylphenyl)pentaerythritol diphosphite or distearyl pentaerythritol diphosphite, alkylated monophenols, polyphenols and alkylated reaction products of polyphenols with dienes, such as, for example, tetrakis[methylene(3,5-di-tert-butyl-4-hydroxyhydrocinnamate)] methane, 3,5-di-tert-butyl-4-hydroxyhydrocinnamate octadecyl, 2,4-di-tert-butylphenyl phosphite, butylated reaction products of para-cresol and dicyclopentadiene, alkylated hydroquinones, hydroxylated thiodiphenyl ethers, alkylidene-bisphenols, benzyl compounds, esters of beta-(3,5-di-tert-butyl-4-hydroxyphenyl)-propionic acid with monohydric or polyhydric alcohols, esters of beta-(5-tert-butyl-4-hydroxy-3-methylphenyl)-propionic acid with monohydric or polyhydric alcohols; esters of thioalkyl or thioaryl compounds, such as, for example, distearylthiopropionate, dilaurylthiopropionate, ditridecylthiodipropionate, amides of beta-(3,5-di-tert-butyl-4-hydroxyphenyl)-propionic acid; fillers and reinforcing agents, such as, for example, silicates, TiO₂, fibers, glass fibers (including continuous and chopped fibers), carbon black, graphite, calcium carbonate, talc, mica and other additives such as, for example, mold release agents, UV absorbers, stabilizers such as light stabilizers, thermal stabilizers and others, lubricants, plasticizers, dispersants, nucleating agents, pigments, mineral fillers, dyes, colorants, anti-static agents, blowing agents, flame retardants, impact modifiers, extender or process oils, among others. Effective amounts of the additives vary widely, but they are usually present in an amount up to about 50% or more by weight, based on the weight of the entire thermoplastic elastomeric composition.

Suitable mineral fillers include, but are not limited to, talc, ground calcium carbonate, precipitated calcium carbonate, precipitated silica, precipitated silicates, precipitated calcium silicates, pyrogenic silica, hydrated aluminum silicate, calcined aluminosilicate, clays, mica, and wollastonite, and combinations thereof.

The thermoplastic elastomeric composition may further comprise one or more visual effects additives, sometimes known as visual effects pigments. The visual effects additives may be present in an encapsulated form, a non-encapsulated form, or laminated to a particle comprising polymeric resin. Some non-limiting examples of visual effects additives are aluminum, gold, silver, copper, nickel, titanium, stainless steel, nickel sulfide, cobalt sulfide, manganese sulfide, metal oxides, white mica, black mica, pearl mica, synthetic mica, mica coated with titanium dioxide, metal-coated glass flakes, and colorants, including but not limited, to Perylene Red. The visual effect additive may have a high or low aspect ratio and may comprise greater than 1 facet. Dyes may be employed such as Solvent Blue 35, Solvent Blue 36, Disperse Violet 26, Solvent Green 3, Anaplast Orange LFP, Perylene Red, and Morplas Red 36. Flourescent dyes may also be employed including, but not limited to, Permanent Pink R (Color Index Pigment Red 181, from Clariant Corporation), Hostasol Red 5B (Color Index #73300, CAS # 522-75-8, from Clariant Corporation) and Macrolex Fluorescent Yellow 10GN (Color Index Solvent Yellow 160:1, from Bayer Corporation). It is also contemplated that pigments such as titanium dioxide, zinc sulfide, carbon black, cobalt chromate, cobalt titanate, cadmium sulfides, iron oxide, sodium aluminum sulfosilicate, sodium sulfosilicate, chrome antimony titanium rutile, nickel antimony titanium rutile, and zinc oxide may be employed.

Extender oils are often used to reduce any one or more of viscosity, hardness, modulus and cost of a composition. The most common extender oils have particular ASTM designations depending upon whether they are classified as paraffinic, naphthenic or aromatic oils. An artisan of ordinary skill in the processing of elastomers will readily recognize and be able to determine the most beneficial types of oil(s) for a given situation. The extender oils, when used, are desirably present in an amount within a range of about 10 to 80 parts per hundred parts of polymers, based on total composition weight.

Melt blending is one preferred method for preparing the final polymer blend of the thermoplastic elastomeric composition. Techniques for melt blending of a polymer with additives of all types are known to those of ordinary skill in the art and can typically be used with the present disclosure. Preferably, the individual components of the blend are combined in a mechanical extruder or mixer, and then heated to a temperature sufficient to form a polymer melt. The mechanical mixer can be a continuous or batch mixer. Examples of suitable continuous mixers include single screw extruders, intermeshing co-rotating twin-screw extruders such as Werner & Pfeiderer ZSK® extruders, counterrotating twin screw extruders such as those manufactured by Leistritz®, and reciprocating single screw kneaders such as Buss® co-kneaders. Examples of suitable batch mixers include lateral 2-roll mixers such as Banbury® or Boling® mixers. Extrusion dies are well known in the art. Many designs of extrusion dies used to coat wire can be adapted for use in the present disclosure.

In a preferred embodiment, the stranded conductor is first formed and compression fit into a rectangular shaped profile. The stranded conductor is then fed through an extruder die to deposit the thermoplastic elastomeric composition along the entire length of the stranded conductor. The flexible stator bar can be up to about 30 feet long and several inches in width. The thickness of the insulation coatings is determined by the voltage of the bar relative to ground and typically may be about 0.2 to 0.3 centimeter. Once the thermoplastic elastomeric composition is extruded onto the stranded conductor, the now formed flexible stator bar can be flexibly fitted into a slot of an electrical machine. The flexible stator bars are then cured with an electrical current heating process into the final shape, i.e., rigidity of the stator bar is increased upon curing.

In an alternative embodiment, the thermoplastic elastomeric material is formed as a hollow profile of insulation such as by extrusion and then cut according to the required length of the stranded conductor. The stranded conductor is thread into the hollow profile. Any gaps existing between the threaded stranded conductor and the hollow extruded profile can be filled by pumping into the gaps an insulating material, such as silicone or B-stage epoxy, followed by a curing step.

Although reference has been made to coating a single layer of a thermoplastic elastomeric insulating material, multiple layers including at least one layer of the thermoplastic elastomeric insulating material are also contemplated. The individual layers may be applied simultaneously from a single die or may be separately applied in several passes or die stations. This latter process allows the possibility of crosslinking at intermediate stages so that only certain layers are crosslinked by exposure to irradiation. Specific layers can also be chemically crosslinked by adding crosslinking additives to only selected layers. For example, a three layer may be deposited such as by extrusion onto the stranded conductor to form the stator bar. In this example, an innermost layer of a semi-conductive material is first extruded onto the stranded conductor. The middlemost layer comprises the thermoplastic elastomeric layer as discussed herein whereas the outermost layer would comprise a second semi-conductive material. The semi-conductive material is preferably a thermoplastic elastomer filled with a conductive material such as carbon. Other materials such as carbon filled epoxies can also be employed. The resistivity of the semi-conductive layer is preferably chosen to be low enough so that the electric stress across the insulating layer is substantially lessened, e.g., a resistance of about 5,000 to about 50,000 ohms per square inch.

Advantageously, the flexible stator bars as described herein can be used to replace conventional stator bars and provide higher power density, lower AC losses, easy manufacture, shorter shop cycle, higher voltages, and lower cost, among others. The stator bars described herein eliminate problems associated with memory of copper bars for better dimension control. As such, better heat transfer from bar to core, which enables uprate of generators, is obtained. Moreover, the present disclosure eliminates the problems associated with alignment of bars for end winding connections. Additionally, the flexible stator bars being formed from stranded conductors with aspect ratios close to one make it suitable for applications where the AC leakage field is not confined to one preferred direction, such as may be the case in "airgap winding" generators, for example,. The flexibility of the stator bars also opens up the possibility of manufacturing the armature winding with continuous loops, thereby advantageously reducing the number of end connections during assembly.

## Claims

1. A process for forming a flexible stator bar 10, comprising:
depositing a thermoplastic elastomeric insulating material 14 onto a flexible stranded conductor 12, wherein the stranded conductor 12 comprises a plurality of strands compressed together to form a substantially rectangular cross sectional profile; and
shaping the flexible stator bar 10 with the insulating material 14 into a final shape for an electrical machine application.

2. The process of Claim 1, wherein depositing the thermoplastic elastomeric insulating material 14 onto the flexible stranded conductor comprises extruding, compression molding, or taping the thermoplastic elastomeric insulating material onto the flexible stranded conductor.

3. The process of any one of the preceding claims, wherein the thermoplastic elastomeric insulating material comprises polyolefins, styrenics, polyurethanes, copolyesters, copolyamides, polysiloxanes, polyorganophosphazines, or polynorbornenes.

4. The process according to any one of the preceding claims, wherein the stranded conductor has a substantially straight length dimension prior to depositing the thermoplastic elastomeric insulating material 14.

5. The process according to any one of the preceding claims, wherein the stranded conductor 12 is formed of a plurality of Litz wires or magnetic wires.

6. The process according to any one of the preceding claims, further comprising depositing an inner semi-conductive layer and an outer semi-conductive layer onto the stranded conductor, wherein the thermoplastic insulating material 14 is intermediate to the inner and outer semi-conductive layers.

7. The process according to any one of the preceding claims, further comprising coating the flexible stator bar 10 with a B-stage epoxy and curing the B-stage epoxy upon assembly of the flexible stator bar 10 in an electrical machine to form a final rigid shape.

8. A flexible stator bar 10, comprising:
a stranded conductor 12 having a rectangular shaped cross sectional profile, wherein the stranded conductor 12 comprises a plurality of wires having a gauge dimension effective to impart flexibility; and
a thermoplastic elastomeric insulating material 14 disposed about the stranded conductor 12.

9. The flexible stator bar of Claim 8, wherein the stranded conductor 12comprises a plurality of Litz wires or magnetic wires.

10. The flexible stator bar of Claims 8 or 9, wherein the thermoplastic elastomeric insulating material 14 comprises polyolefins, styrenics, polyurethanes, copolyesters, copolyamides, polysiloxanes, polyorganophosphazines, or polynorbornenes.
